# EUROPÄISCHE PATENTSCHRIFT

(11) **EP 0 775 625 B1**
(45) Veröffentlichungstag und Bekanntmachung des Hinweises auf die Patenterteilung: **26.01.2000**
(21) Anmeldenummer: 96117654.2
(22) Anmeldetag: 06.11.1996
(51) Int. Cl.: B62K 19/36, B62J 1/06

(54) **Vorrichtung zur Höhenverstellung eines Fahrradsattels**
Device for adjusting the height of a bicycle saddle
Dispositif de réglage en hauteur d'une selle de bicyclette

(30) Priorität: 09.11.1995 DE 19541760
(43) Veröffentlichungstag der Anmeldung: 28.05.1997
(73) Patentinhaber: Schröder, Günter, Dr.-Ing., 66780 Siersburg (DE)
(72) Erfinder: Schröder, Günter, Dr.-Ing., 66780 Siersburg (DE)

(56) Entgegenhaltungen:
- WO-A-93/23281
- WO-A-93/23283
- WO-A-96/22216
- DE-A- 4 334 392

## Beschreibung

Die Erfindung betrifft eine Vorrichtung zur Höhenverstellung eines an einer Sattelstütze befestigten Sattels eines Zweirads, insbesondere eines Fahrrads, wobei ein Stützrohr der Sattelstütze relativ zu einem hinteren schrägen Rahmenrohr in diesem höhenverschiebbar, feststellbar und durch ein hydraulisches Druckmittel beaufschlagbar angeordnet ist.

Der Sattel eines Fahrrads wird üblicherweise durch mechanische Klemmung einer an ihm befestigten Sattelstütze im oberen Teil des hinteren schrägen Rahmenrohres des Fahrrads in der Höhe fixiert. Zur Verstellung der Sattelhöhe muß die Klemmung der Sattelstütze gelöst, der Sattel mit der Sattelstütze im hinteren schrägen Rahmenrohr aufwärts oder abwärts bewegt und die Klemmung der Sattelstütze dann wieder erzeugt werden. Bei jeder dieser Tätigkeiten wirken Reaktionskräfte auf den Rahmen, der üblicherweise von der verstellenden Person zur Aufbringung der Kräfte gehalten wird. Diese Arbeiten lassen sich meist nur im Stillstand des Fahrrads und mit Werkzeug ausführen.

Die für den Betrieb des Fahrrads optimale Sattelhöhe ist eine andere als die an sich notwendige Sattelhöhe, die bei Stillstand des Fahrrads erlaubt, daß der Fahrer beide Füße auf den Untergrund bringen kann, ohne vom Sattel steigen zu müssen.

Da die Verstellung der Sattelhöhe mit den erwähnten Arbeiten verbunden ist, ist die an jedem Fahrrad eingestellte Sattelhöhe ein Kompromiß zwischen den Bedürfnissen des Fahrers, einerseits beide Füße im Stillstand so auf den befahrenen Untergrund zu bringen, daß er nicht vom Sattel steigen muß, um sich und das Fahrrad vor dem Umkippen im Stand zu bewahren, und andererseits den Sattel so hoch zu haben, daß er mit der ergonomisch günstigsten Beinstreckung die Kurbeln treten kann. Die ideale Einstellung der Sattelhöhe für den Stand bedingt die nicht ideale Einstellung der Sattelhöhe für den Fahrbetrieb und umgekehrt.

Das Dokument DE-A-4334392 zeigt eine Vorrichtung gemäß dem Oberbegriff des Anspruchs 1.

Aus der DE-A-29 00 780 ist eine Vorrichtung bekannt, mit der die Höhe eines Fahrradsattels einfacher und schneller im Stand des Rads und bei abgestiegenem Fahrer verstellt werden kann, als es mit der bis dahin üblichen Schraube-Mutter-Klemmung möglich war. Während bei den üblichen Schraube-Mutter-Klemmungen der Sattel sehr genau und unbeweglich zum Fahrradrahmen fixiert wird, erlaubt die Vorrichtung nach DE-A-29 00 780 nur die Positionierung des unbelasteten Sattels in einer Nullstellung, um die sich der Sattel bei wechselnder Belastung, wie sie in normalen Fahrbetriebszuständen üblich ist, auf und ab bewegt. Die Länge der Bewegungen um die Nullstellung ist abhängig vom Gasdruck in der Feder und von den am Sattel in längs-achsialer Richtung der Vorrichtung angreifenden Kräfte. Dazu weist die Vorrichtung eine Gasdruckfeder mit vorgegebenem Gasdruck auf, bei der zwischen den beiden Gasräumen, die sich beiderseits des Kolbens befinden, eine absperrbare Verbindung hergestellt wird, die den Volumenstrom zwischen den beiden Gasräumen bei belastetem Kolben sperren und freigeben kann. Somit wird der Kolben zwischen den beiden Endstellungen "ganz unten" und "ganz oben" positionierbar. In jeder Stellung des Kolbens oberhalb "ganz unten" ist das bei abgesperrter Gasräume-Verbindung unterhalb des Kolbens befindliche Luft- oder Gasvolumen volumenkompressibel und wirkt federnd auf vertikale Sattelbewegungen. Die Federwege nehmen zur Kolbenstellung "ganz oben" zu, und der Sattel wird weicher.

Diese Vorrichtung weist eine Mindestbaugröße auf, die nicht mehr in bestehende Fahrradrahmen eingebaut werden kann.

Aus der DE-PS 651 151 ist eine Vorrichtung bekannt, mit der die Höhe eines Fahrradsattels im Stillstand und in der Fahrt verstellbar ist. Diese Vorrichtung weist eine verstellbare Sattelstütze mit hydraulischer Beaufschlagung auf, bei der zwei in einem Zylinder wirkende Kolben unter Federdruck stehen. Ein Ventil ist mittels eines Bowdenzugs vom Sattel aus betätigbar, um den Ausgleich der Flüssigkeit in zwei Druckkammern herzustellen. Diese Verstellvorrichtung verwendet als Energiespeicher eine zylindrische Schraubenfeder und baut daher zwangsweise viel länger als der Einbauraum eines Tourenrads erlaubt.

Diese Vorrichtung weist erhebliche technische Mängel auf, die sich in äußerst komplizierter Montage und großer Baulänge darstellen, und die der Grund dafür sind, daß diese Vorrichtung sich auf dem Markt nicht durchgesetzt hat.

Der Erfindung liegt die Aufgabe zugrunde, eine einfachere Höhenverstellvorrichtung für einen Sattel zu schaffen, die sich durch eine geringere Baugröße und einfachere Montage auszeichnet.

Die Aufgabe wird erfindungsgemäß durch die Merkmale des kennzeichnenden Teils des Anspruchs 1 gelöst.

Die erfindungsgemäße Vorrichtung besteht im wesentlichen aus dem nach oben offenen Hohlkörper und der mit dem Stützrohr darin eintauchenden, längsbeweglich geführten Sattelstütze, die an ihrem oberen Ende den Sattel trägt, und dem über eine Hohlleitung mit dem Hohlkörper verbundenen, räumlich getrennten Druckspeicher. Das untere Ende des Stützrohrs bildet mit der Kolbenfläche den beweglichen Abschluß des Druckraums im Hohlkörper.

Nach der Montage des Hohlkörpers und des leeren und drucklosen Speicherbehälters und dem Verbinden der beiden durch die Hohlleitung wird der Hohlkörper mit Hydraulikflüssigkeit, vorzugsweise Pflanzenöl, gefüllt. Erst jetzt wird das gegen die Hydraulikflüssigkeit abdichtende Stützrohr der Sattelstütze in den Hohlkörper auf die Oberfläche der Hydraulikflüssigkeit geführt und gegen sie gedrückt. Nun wird das Stellventil geöffnet und die Hydraulikflüssigkeit solange in den Speicherbehälter transportiert, solange das Stellventil geöffnet ist. Durch das Schließen des Stellventils wird die Sattelstütze relativ zum Hohlkörper positioniert. Die Sattelstütze wird dann mit geeigneten Bauteilen gegen Verdrehen und hinsichtlich einer Hubbegrenzung gesichert. In den Druckspeicher wird über das Gasventil Luft, z.B. mit einer Luftpumpe, eingedrückt, bis der gewünschte Gasdruck über der Hydraulikflüssigkeit erreicht ist.

Wird bei unbelasteter Sattelstütze das Stellventil geöffnet, so wird Hydraulikflüssigkeit vom Speicherbehälter in den Druckraum des Hohlkörpers strömen und die Sattelstütze heben. Ein Schließen des Stellventils stoppt den Flüssigkeitsfluß und positioniert somit die Sattelstütze. Bei belasteter Sattelstütze und geschlossenem Stellventil wird im Druckraum des Hohlkörpers ein Druck aufgebaut, der bei geöffnetem Stellventil die Hydraulikflüssigkeit gegen den geringeren Gasdruck in den Speicherbehälter verdrängt. Dabei steigt der Gasdruck durch die Kompression im Speicherbehälter an, so daß wieder ausreichend Energie zur Verfügung steht, die unbelastete oder kaum belastete Sattelstütze nach Öffnen des Stellventils wieder in Richtung "Hochstellung" zu bewegen. Zur Entlastung hebt sich der Radfahrer durch kurzes Stehen in den Pedalen.

Der Vorgang ist beliebig wiederholbar. Druckgas- und Hydraulikflüssigkeitsverluste können sehr einfach durch Nachfüllen ausgeglichen werden. Die Vorrichtung wird vorzugsweise mit Pflanzenöl betrieben, so daß keine Umweltschäden bei Ölwechseln oder Ölverlusten zu erwarten sind.

In vorteilhafter Ausgestaltung der Erfindung ist der Energiespeicher im Druckmittelspeicherbehälter ein über der Hydraulikflüssigkeit befindliches Gas. Ein Teil der beim Absenken des belasteten Sattels in kinetische Energie des Hydraulikmittels umgewandelte potentielle Energie des Radfahrers wird zur Druckerhöhung des Gases im Druckmittelspeicherbehälter benutzt. Um sicherzustellen, daß dieses Gas nicht in den Druckraum des Hohlkörpers gelangt, ist der Druckmittelspeicherbehälter mit einer gewissen Menge einer korrosionsmindernden, praktisch inkompressiblen Hydraulikflüssigkeit sehr geringen Dampfdrucks gefüllt. Vorzugsweise wird aus Umweltschutzgründen Pflanzenöl verwendet. Als in der Druckerhöhung energiespeicherndes Gas wird Luft, die leicht mit einer Handpumpe bis zum erforderlichen Druck eingebracht werden kann, verwendet. Mit dem vorgegebenen Volumen des Druckmittelbehälters und der Mindesteinfüllmenge eines Hydraulikmittels sowie des von der Bauart abhängigen höchstzulässigen Behälterinnendrucks steht es dem Anwender frei, die Geschwindigkeit der Sattelhöhenverstellung durch Veränderung der Hydraulikmittelbefüllung und des Gasdrucks bei hochgestelltem Sattel zu beeinflussen.

In weiterer vorteilhafter Ausgestaltung der Erfindung ist das fernbetätigbare Stellventil vom Lenker des Fahrrads aus betätigbar. Durch diese Fernbetätigungsmöglichkeit kann der Fahrer den Sattel während der Fahrt höhenverstellen. Beispielsweise kann er, im Sattel bleibend, diesen tiefer stellen, wenn er in einen instabilen Fahrzustand gerät und die Füße schnell auf den Boden bringen möchte. Er kann, ohne anzuhalten, den Sattel wieder höher stellen, in dem er sich während der Fahrt aus dem Sattel erhebt und das Stellventil öffnet.

Eine vorteilhafte Ausgestaltung der Erfindung ist dadurch gekennzeichnet, daß die Fernbetätigung des Stellventils mit einer Handbremse des Fahrrads gekoppelt ist. Handbremsen haben üblicherweise ein Freispiel, ehe sie greifen. Man kann mit Anordnung eines zweiten Bowdenzugs am Handbremshebel die Sattelverstellung schon wirksam werden lassen, bevor die Bremse anspricht. Damit wird es möglich, den Sattel schon abzusenken, bevor die Geschwindigkeit des Fahrrades so weit verringert ist, daß der Fahrzustand instabil wird. Außerdem kann der Sattel während der Fahrt auch verstellt werden, ohne zu bremsen. Der Handbremshebel hat vorteilhafterweise eine zweite Funktion.

Mit der erfindungsgemäßen Verstellvorrichtung ist ein schnelles Verstellen von Fahrradsätteln möglich. Die Höhenverstellung kann in jedem Bewegungszustand des Zweirades erfolgen. Die Unfallgefahr für Radfahrer wird verringert. Vorhandene Fahrräder können mit dieser Verstellvorrichtung nachgerüstet werden.

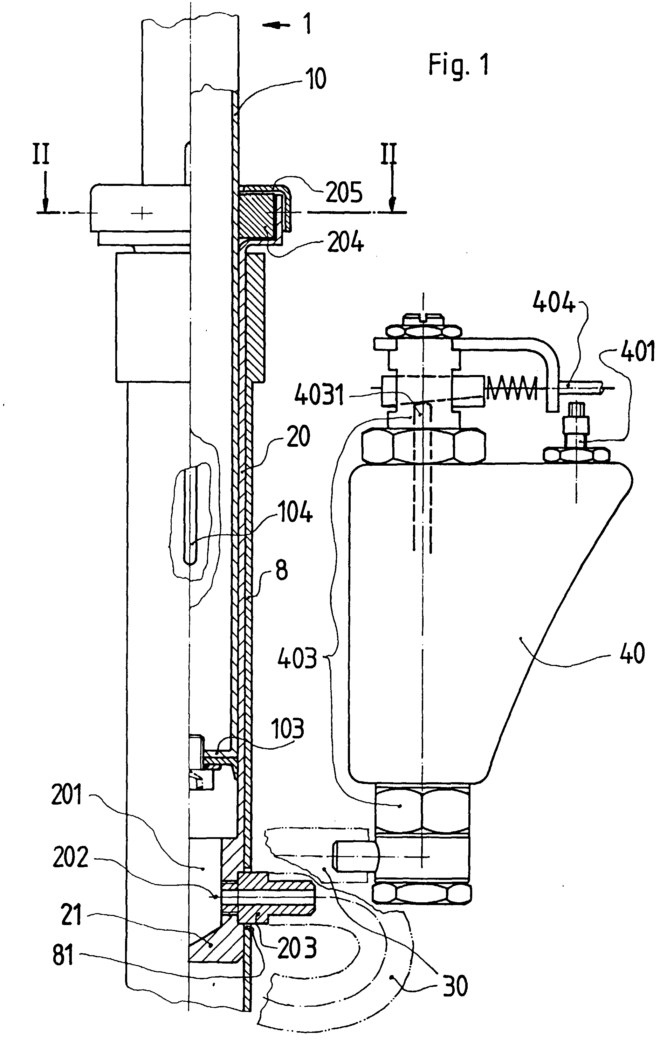

Anhand der schematischen Zeichnung wird nachstehend ein Ausführungsbeispiel der Erfindung näher erläutert. Es zeigt
- Fig. 1: in schematischer Darstellung eine druckmittelbeaufschlagbare, höhenverstellbare Sattelstütze in einem Rahmenrohr eines Fahrrads unter Fortlassung des Sattels,

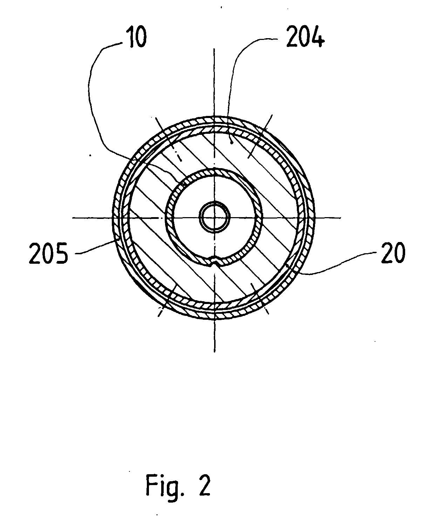

- Fig. 2: einen Querschnitt gemäß Linie II-II in Fig. 1.

Die Sattelstütze 1 besteht im wesentlichen aus einem Stützrohr 10. Das Stützrohr 10 ist über eine achsial verlaufende Führungsnut 104 verdrehsicher ausgebildet. Das untere Ende des Stützrohrs 10 ist stirnseitig durch einen Boden 103 verschlossen, der eine druckbeaufschlagbare Fläche bildet.

Das Stützrohr 10 ist passend in einem nach oben offenen Hohlkörper 20, der rohrförmig ausgebildet ist, angeordnet. Der Hohlkörper 20 ist an seinem unteren Ende stirnseitig von einem Boden 21 verschlossene dessen Innenfläche druckbeaufschlagbar ist.

Um die Sattelnase konstant in vorgegebener Fahrtrichtung zu halten, ist die Sattelstütze 1 mit der Führungsnut 104 versehen. Ein in eine am oberen Ende des Hohlkörpers 20 angebrachte Erweiterung eingelegtes Führungselement 204 ist so geformt, daß es eine Verdrehung der Sattelstütze 1 verhindert. Das Führungselement 204 ist gegen Verdrehung und längsachsiale Bewegung mittels Deckel 205 gesichert.

Der Hohlkörper 20 ist in einem schrägen Rahmenrohr 8 des Fahrradrahmens festsitzend angeordnet. Das Rahmenrohr 8 weist eine Radialbohrung 81 auf, die mit einer Radialbohrung 202 in der Rohrwand des Hohlkörpers 20 fluchtet. Über diese Bohrungen 81 und 202 steht ein Druckraum 201, der durch die beiden Böden 103 und 21 und die Innenflächen des Hohlkörpers 20 begrenzt wird, mit einem Druckmittelspeicherbehälter 40 in Verbindung.

Der Druckraum 201 ist über das in die Bohrung 202 des Hohlkörpers 20 geschraubte Leitungsanschlußmittel 203 und die daran anschließende Druckleitung 30 mit dem Druckmittelspeicherbehälter 40 verbunden.

Der Druckmittelspeicherbehälter 40 ist ein druckfester Hohlkörper, der über eine durch eine Schraube verschließbare Öffnung mit korrosionsmindernder, praktisch inkompressibler Flüssigkeit sehr geringen Dampfdrucks und über ein Gasventil 401 mit einem Gas befüllt ist. Das Gasventil 401 befindet sich in der die Öleinfüllöffnung verschließenden Schraube. Der Druckraum des Speicherbehälters 40 ist an seinem unteren Ende mit einem Stellventil 403 verschließ- und öffenbar. An dieses Stellventil 403 ist die Druckleitung 30 angeschlossen. Das Stellventil 403 wird über den nach oben durch den Speicherbehälter 40 geführten federbelasteten Ventilschaft 4031 geöfffnet und geschlossen.

Die Wirkungsweise der vorstehend beschriebenen Vorrichtung ist wie folgt.

Der Druckmittelspeicherbehälter 40 ist soweit mit Hydraulikflüssigkeit und Gas befüllt, daß mit Hilfe der im unter Druck stehenden Gas enthaltenden potentiellen Energie ein Teil der Flüssigkeit durch die Druckleitung 30 in den Druckraum 201 befördert werden kann und dabei der un- oder nur wenig belastete Zusammenbau Sattelstütze 1 und Sattel bis zur bauteilbedingten Höchststellung bewegt werden kann. Durch Schließen des Stellventils 403 wird der Fluß der Hydraulikflüssigkeit gestoppt und damit das Volumen des Druckraums 201 und somit die Höhenstellung des Sattels bestimmt. Wird bei belastetem Sattel durch Betätigen des Ventils 403, z.B. durch Betätigen eines separaten Bowdenzugs oder eines mit der Handbremse verbundenen Bowdenzuges 404 das Stellventil 403 geöffnet, so wird Hydraulikflüssigkeit aus dem Druckraum 201 in den Speicherbehälter 40 gedrückt und das dort als Energiespeicher befindliche Gas komprimiert. Der Vorgang ist beliebig wiederholbar. Druckgas- und Hydraulikverluste können sehr einfach durch Nachfüllen über das Gasventil 401 und die mit der Schraube dieses Ventils 401 verschlossene Öffnung im Druckmittelspeicherbehälter 40 ausgeglichen werden.

Zur Nachrüstung kann der Hohlkörper 20 in das Rahmenrohr 8 eingesetzt und arretiert werden, nachdem vorher das Rahmenrohr 8 dort durchbohrt wurde, wo das Leitungsanschlußmittel 203 eingeschraubt werden soll. Nach dem Verbinden des Leitungsanschlußmittels 203 und des Druckmittelspeicherbehälters 40 mittels der Druckleitung 30 wird der Druckmittelspeicherbehälter 40 außen am den Hohlkörper 20 enthaltenden Rahmenrohr 8 befestigt und die Verbindung zur Fernbetätigung des Ventils 403 hergestellt.

### Bezugszeichenliste

- 1: Sattelstütze
- 10: Stützrohr
- 103: Boden
- 104: Führungsnut
- 20: Hohlkörper
- 21: Boden
- 201: Druckraum
- 202: Radialbohrung
- 203: Leitungsanschlußmittel
- 204: Führungselement
- 205: Deckel
- 30: Druckleitung
- 40: Druckmittelspeicherbehälter
- 401: Gasventil
- 403: Stellventil
- 4301: Ventilschaft
- 404: Bowdenzug
- 8: Rahmenrohr
- 81: Radialbohrung

## Patentansprüche

1. Vorrichtung zur Höhenverstellung eines an einer Sattelstütze ( 1 ) befestigten Sattels eines Fahrrades, wobei in dem oberen Bereich eines hinteren schrägen Rahmenrohres ( 8 ) ein nach oben offener und an seinem unteren Ende stirnseitig durch einen Boden ( 21 ) verschlossener Hohlkörper ( 20 ) passend fest eingesetzt ist, in dem das an einem Ende verschlossene Stützrohr ( 10 ) der Sattelstütze ( 1 ) relativ zu Hohlkörper ( 20 ) und Rahmenrohr (8 ) höhenverschiebbar, feststellbar und von unten durch ein hydraulisches Druckmittel beaufschlagbar angeordnet ist,
**dadurch gekennzeichnet,**
daß das Stützrohr ( 10 ) an einem Ende durch einen Boden ( 103 ) verschlossen ist,
daß das Stützrohr ( 10 ) dicht passend über die Länge des Hohlkörpers ( 20 ) in diesem verschiebbar angeordnet ist ,
daß der Boden ( 21 ) des Hohlkörpers ( 20 ) und der Boden ( 103 ) des Stützrohrs ( 10 ) einen volumenvariablen Druckraum ( 201 ) höhenmäßig begrenzen,
daß der Druckraum ( 201 ) mit einem außerhalb des Rahmenrohrs ( 8 ) angeordneten, ein Gas als Energiespeicher und eine Druckflüssigkeit als Druckmittel enthaltenden Druckmittelspeicher ( 40 ) verbindbar ist,
daß eine druckfeste Verbindung zwischen Druckraum ( 201 ) und Druckmittelspeicher ( 40 ) über ein fernbetätigbares im Innern oder auf der Außenseite des Druckmittelspeichers ( 40 ) befindlichen Stellventils ( 403 ) erfolgt,
daß das energiespeichernde Gas über ein Gasventil ( 401 ) eingeführt und entfernt werden kann, daß das Druckmittel bei entferntem Gasventil ( 401 ) durch die somit offene Aufnahmebohrung im Gehäuse des Druckmittelspeichers ( 40 ) eingefüllt und entnommen werden kann,
daß die Ausfahr- und Verdrehbegrenzung des Stützrohres ( 10 ) der Sattelstütze mit einer externen Vorrichtung erfolgt.

## Claims

1. Device for adjusting the height of a bicycle saddle which is attached to a seatpost ( 1 ), wherein a hollow body ( 20 ) which is open at the top and closed at the bottom by means of wall ( 21 ) is inserted tightly fitting into the upper end of an inclined rear frame tube, said device comprising the at one end closed support tube ( 10 ) of the seat post ( 1 ), said support tube ( 10 ) beeing mounted to hollow body ( 20 ) so as to be slideably movable and holdable in height relatively to hollow body ( 20 ) and to frame tube ( 8 ) and beeing affectible therein by hydraulic pressure fluid,
characterised in that
- the support tube ( 10 ) is closed at one end by a wall ( 103 ),
- the support tube ( 10 ) is arranged tighly fitting slidable along the length of hollow body ( 20 ), in said hollow body ( 20 ),
- the wall ( 21 ) of hollow body ( 20 ) and the wall ( 103 ) of support tube ( 10 ) define in height a pressure space, which is variable in volume,
- the pressure space ( 201 ) is connectable to a pressure medium storage vessel ( 40 ), being arranged outside of frame tube ( 8 ) and containing a gas for energy storage and a pressure fluid for pressure medium,
- a pressure tight connection between pressure space ( 201 ) and pressure medium storage vessel ( 40 ) is made via remotely controlled control valve ( 403 ), which is arranged inside or on the outer surface of the pressure medium vessel ( 40 ),
- the energy storing gas can be filled in and removed via a gas valve ( 401 ),
- the pressure fluid can be removed through the then open bore in the container of the pressure medium storage vessel ( 40 ) if the gas valve ( 401 ) is taken off,
- the limiting of stroke and twist of the support tube ( 10 ) of the seat post is to be caused by an external device.

## Revendications

1. Dispositif de réglage en hauteur d'une selle de bicyclette fixée sur un tube porte-selle (1), dans lequel un corps creux (20), ouvert vers le haut et fermé frontalement à son extrémité inférieure par un fond (21), est ajusté fixe dans la zone supérieure d'un tube de cadre (8) arrière incliné, corps creux dans lequel le tube support (10), fermé à une extrémité, du tube porte-selle (1) est monté de manière à pouvoir être déplacé en hauteur par rapport au corps creux (20) et au tube de cadre (8), à pouvoir être bloqué et à pouvoir être alimenté par le bas par un fluide de pression hydraulique,
caractérisé par le fait
que le tube support (10) est fermé à une extrémité par un fond (103),
que le tube support (10) est ajusté de façon étanche sur toute la longeur du corps creux (20) de manière à pouvoir y coulisser,
que le fond (21) du corps creux (20) et le fond (103) du tube support (10) délimitent en hauteur un espace sous pression (201) au volume variable,
que l'espace sous pression (201) peut communiquer avec un réservoir de fluide de pression (40) monté en dehors du tube de cadre (8), contenant un gaz comme accumulateur d'énergie et un liquide de pression comme fluide de pression,
qu'une communication résistant à la pression est mise en oeuvre entre l'espace de pression (201) et le réservoir de fluide de pression (40) par l'intermédiaire d'une soupage de réglage (403) pouvant être actionnée a distance et se trouvant à l'intérieur ou sur l'extérieur du réservoir de fluide de pression (40),
que le gaz accumulant l'énergie peut être introduit et enlevé par l'intermédiaire d'une soupage de gaz (401),
que le moyen de pression lorsque la soupape de gaz (401) est enlevée peut être introduit et enlevé par le trou de logement ainsi ouvert dans le carter du réservoir de fluide de pression (40),
et que la limitation de sortie et de rotation du tube support (10) du tube porte-selle s'effectue au moyen d'un dispositif extérieur.
